# EUROPEAN PATENT APPLICATION

(11) **EP 1 600 902 A1**
(43) Date of publication of application: **30.11.2005**
(21) Application number: 05011370.3
(22) Date of filing: 25.05.2005
(51) Int. Cl.: G07F 17/32, A63F 5/00

(54) **Gaming machine**

(30) Priority: 27.05.2004 JP 2004157569; 10.05.2005 JP 2005137217
(71) Applicant: Aruze Corp., Tokyo 135-0063 (JP)
(72) Inventor: Matsuno, Masaki, Tokyo 135-0063 (JP); Takeda, Kengo, Tokyo 135-0063 (JP)
(74) Representative: Grünecker, Kinkeldey, Stockmair & Schwanhäusser Anwaltssozietät

(57) **Abstract**

The present invention provides a gaming machine with a game table in which a plural kinds of objects are put on the game table in a game, each object having an outline characteristic which is different every each kind, and in which plural players conduct the game, the gaming machine comprising: an image taking device for taking an image of the game table on which the object is put and outputting image data of the game table; a object determination device for processing the image data output from the image taking device and determining the outline characteristic of the object and outputting object information indicating the player who uses the object and a bet position to which the object is betted; and a controller for wholly controlling the gaming machine based on the object information output from the object determination device.

## Description

### BACKGROUND OF THE INVENTION

### 1. Field of the Invention

The present invention mainly relates to a gaming machine and in particular to a gaming machine in which an image is displayed on an image focusing device such as a screen, for example, and medals each of which has a different figure and corresponds to each of different players are utilized and the medals put on the screen are recognized, thereby it can be determined the player who bets the medal and a bet position (bet frame) to which the player bets the medal.

### 2. Description of Related Art

Conventionally, as a gaming machine installed in a game arcade or a game playing place, there exist machines each of which provides games while displaying a poker table or a betting board and the like on a monitor display. For example, as shown in Unexamined Japanese Publication No. 2003-325726, it is proposed a gaming machine (roulette gaming machine) with a roulette and a monitor display using a liquid crystal display or a CRT monitor on which a betting table displaying numbers, each number becoming an object to be betted by the player, is displayed.

In this gaming machine, each player generally utilizes a game progressing device or input buttons, determination buttons and bet buttons arranged on a console panel disposed near the player, as an input device to input his/her own determination (for example, the bet position to be betted and the bet money).

However, in a case of the input device utilizing the console panel on hand of the player, it is difficult for the player to enjoy presence of the game. That is to say, in the real game such as a roulette game, the player extends his/her hand on the game table and puts chip (s) or medal (s) on a desirable position, thereby the player directs the money to be betted and the bet position on the game table. However, in a case of the device utilizing the console panel on hand of the player, it is not required for the player to do such operation, but it is merely required for the player to simply press the buttons as in the conventional gaming machine in which a game pad is only operated by the player. Therefore, the above conventional gaming machine is not suitable to provide presence of the game.

### SUMMARY OF THE INVENTION

In order to dissolve the above problems, the present invention has been done and has an object to provide a gaming machine in which an operation to carry the object such as a chip or medal to the bet position on the table by his/her own hand of the player can be handled as an input in the gaming machine.

To accomplish the above object, according to one aspect of the resent invention, it is provided a gaming machine with a game table in which a plural kinds of objects are put on the game table in a game, each object having an outline characteristic which is different every each kind, and in which plural players conduct the game,
the gaming machine comprising:
an image taking device for taking an image of the game table on which the object is put and outputting image data of the game table;
an object determination device for processing the image data output from the image taking device and determining a position of the object on the game table and the outline characteristic of the object and outputting object information indicating the player who uses the object and a bet position to which the object is put; and
a controller for wholly controlling the gaming machine based on the object information output from the object determination device.

According to the above gaming machine, it can be done effect with operation feeling or presence that the player really bets chips on the game table. And in the gaming machine, even if plural players simultaneously or almost simultaneously bet the objects, the bet position to which the object is betted can be recognized every the player. Therefore, there is no fear that game stream becomes unnatural, different from a case that play order of the player is directed.

According to another aspect of the present invention, it is provided a gaming machine gaming machine with a game table in which a plural kinds of objects are put on the game table in a game, each object having an outline characteristic which is different every each kind, and in which plural players conduct the game,
the gaming machine comprising:
a projection device for projecting an image to display the game table;
a screen device for focusing the image projected by the projection device;
an image taking device for taking an image of the object put on the screen device and outputting image data of the object;
an object determination device for processing the image data output from the image taking device and determining a position of the object on the screen device and the outline characteristic of the object and outputting object information indicating the player who uses the object and a bet position to which the object is betted; and
a controller for wholly controlling the gaming machine based on the object information output from the object determination device.

According to the gaming machine mentioned above, it can be done effect with operation feeling or presence that the player really bets chips on the game table. And in the gaming machine, even if plural players simultaneously or almost simultaneously bet the objects, the bet position to which the object is betted can be recognized every the player. Therefore, there is no fear that game stream becomes unnatural, different from a case that play order of the player is directed. Further, it can be avoided that unnecessary information is added to the image data due to outer disturbance (occurrence that unnecessary image is reflected on the game table from peripheral devices of the gaming machine), thereby the object information can be correctly obtained.

According to the present invention, it can be given to the player presence as if the player really bets on the game table by using the object such as a chip and even if plural players simultaneously or almost simultaneously bet the objects, the bet position to which the object is betted can be recognized every the player.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.

In the drawings,
Fig. 1 is an explanatory view showing a basic construction of an image display system,
Fig. 2 is an explanatory view showing another basic construction of an image display system,
Fig. 3 is an outline perspective view showing a gaming machine of the embodiment utilizing the image display system,
Fig. 4 is an explanatory view showing an arrangement of an optical system constructing the gaming machine of the embodiment,
Fig. 5 is a block diagram showing an electrical system of the gaming machine of the embodiment,
Fig. 6 is an explanatory view showing an image example displayed on a front display,
Fig. 7 is an explanatory view showing an image example displayed on a transparent screen of the gaming machine,
Fig. 8 is a flowchart for conducting a medal determination process by utilizing image data,
Fig. 9 is an explanatory view showing differences in figures among medals, and
Fig. 10 is an explanatory view showing a table screen on which the medals are put, the table screen being taken by a camera, and
Fig. 11 is a block diagram showing an electrical system of a modification of the gaming machine according to the embodiment.

### DETAILED DESCRIPTION OF THE PREFERRED EMBODIMENTS

Hereinafter, the embodiments of the present invention will be described with reference to the drawings.

### [First embodiment]

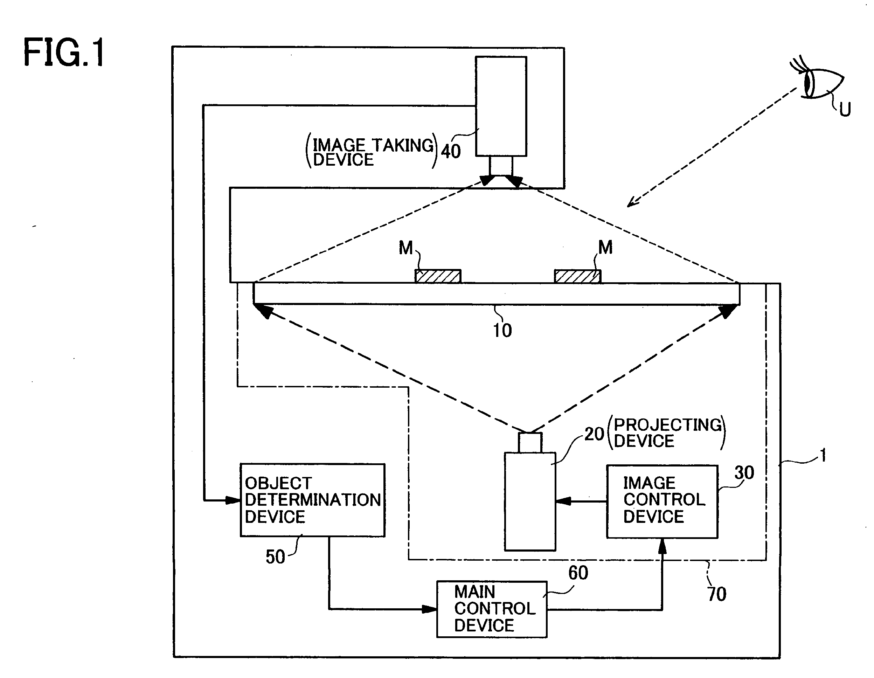

At first, the first embodiment according to the present invention will be described with reference to Fig. 1. Fig. 1 is an explanatory view showing a basic construction of an image display system having detection function, according to the first embodiment of the present invention.

The image display system 1 is constructed from: a screen device 10 on which an image is focused; an image control device 30 for supplying image data; a projecting device 20 for projecting the image on the screen device 10 from the rear plane of the screen device 10 based on the image data supplied from the image control device 30; an image taking device 40 for taking an image of the screen device 10 and an object M put on the front plane (surface) of the screen device 10; an object determination device 50 for receiving the image data of the front plane of the screen device 10 output from the image taking device 40 and determining a position of the object M and a player corresponding to the object M based on the image data, thereby for outputting object information including information indicating the position of the object M and information indicating the player corresponding to the object M; and a main control device 60 for controlling operation of the image display system 1 based on the object information from the object determination device 50 and for transmitting to the image control device 30 the image to be projected on the screen device 10, based on the object information from the object determination device 50. The screen device 10, the projecting device 20 and the image control device 30 constructs an image display device 70 to display an image for a user.

The above mentioned image display system 1 can be used by a plurality of players (users) at the same time. Here, on the screen device 10, the directed position and the object M to indicate the player corresponding to the directed position are prepared for each of the players.

As the object M, any of objects may be utilized if such object can be put on the screen device 10. For example, a plastic chip, a metal medal and the like may be utilized. Further, as for the object M, various things may be used so long as each of them has the outline characteristic through which it can be distinguished with the others. For example, a marker, a coin or a piece may be used.

In the embodiment, more than two kinds of objects M are utilized and each kind of the object M has an outline characteristic through which one kind of the object M can be distinguished with another kind of the object M. The outline characteristic of each kind of the object M is corresponded to the player who uses such object M. The outline characteristic is defined by color, shape or pattern, or combining more than two of them. For example, it is conceivable that the color as the outline characteristic, through which one kind of the object M can be distinguished with the other kind of the object M, is added to one kind of the object M. Now, supposed that five players use the image display system 1, five kinds of the objects M are utilized. Here, as five kinds of the objects M, for example, it is enough to prepare five plastic chips with the same shape, each of which is colored in one of blue, red, yellow, white and black.

In addition to the above, the outline characteristic is not limited to the outline characteristic which is recognized under visible light. The outline characteristic may be the characteristic which is recognized under light having specific spectrum (for example, ultraviolet light).

The screen device 10 has transparency, therefore light coming to both the front and rear planes can pass therethrough. The screen device 10 is, for example, a transparent screen for a liquid crystal projector. The transparent screen as the screen device 10 has light scattering layers and includes a screen capable of projecting an image with high light-contrast by efficiently scattering light from the liquid crystal projector. And when the user U sees the front plane of the screen device 10, the user U sees as if the optical image projected toward the rear plane of the screen device 10 by the projecting device 20 is focused on the screen device 10, as a result, the user U can see and recognize the image projected by the projecting device 20 corresponding to the image data.

The projecting device 20 is constructed from an optical projecting system which can project the optical image on the screen device 10 based on the image data. For example, the projecting device 20 is the liquid crystal projector (DLP (Digital Liquid crystal Projector)).

The image taking device 40 is a device to produce image data of the front plane of the screen device 10 by taking the image of the front plane of the screen device 10 and is, for example, constructed from a digital camera, a digital video camera, a CCD camera unit and the like.

The image control device 30, the object determination device 50 and the main control device 60 construct a device having a calculation processing device (CPU), a main memory (RAM), a read only memory (ROM), an input and output device (I/O) and an external memory device such as a hard disc device if necessary, and are, for example, an information process device such as a computer, a work station, a LSI chip and the like. And it is stored in the ROM or the hard disc device programs to operate the information process device as the image control device 30, the object determination device 50 or the main control device 60, and these programs are stored in the main memory and the CPU executes these programs, thereby the image control device 30, the object determination device 50 or the main control device 60 are realized by the information process device. Further, it is not necessary to store the above programs in the memory device provided in the information process device, and the programs may be provided from the external device (for example, a server of ASP (Application Service Provider) and the provided programs may be stored in the main memory.

The image control device 30, the object determination device 50 and the main control device 60 may be realized by an individual information process device, respectively and one information process device may function as any more than two of the image control device 30, the object determination device 50 and the main control device 60.

The image control device 30 stores plural image data to show to the user U and reads out the necessary image data corresponding to the instruction from the main control device 60. Further, the image control device 30 conducts image process if necessary and provides the image data to the projecting device 20.

The object determination device 50 receives the image data of the front plane in the screen device 10 output from the image taking device 40 and conducts the image process necessary for the above image data, thereby the object determination device 50 detects the position of the object M and the player corresponding to the object M and outputs the object information including the information indicating the position obtained by the above detection and the information indicating the player. As the image process, there exist a threshold process to extract the area of the image of the object M and an edge process to extract an outline of the object M. The object determination device 50 produces the position information of the object M by utilizing the area obtained by the threshold process and the edge process, and the coordinate position information of pixels of the outline.

The main control device 60 has function to wholly control operation of the image display system 1 and instructs the timing to output which image data to the image control device 30 and transmits the instruction to wholly control the image display system 1, for example, to change the image data to the image control device 30 corresponding to the object information from the object determination device 50.

### [Modification of the first embodiment]

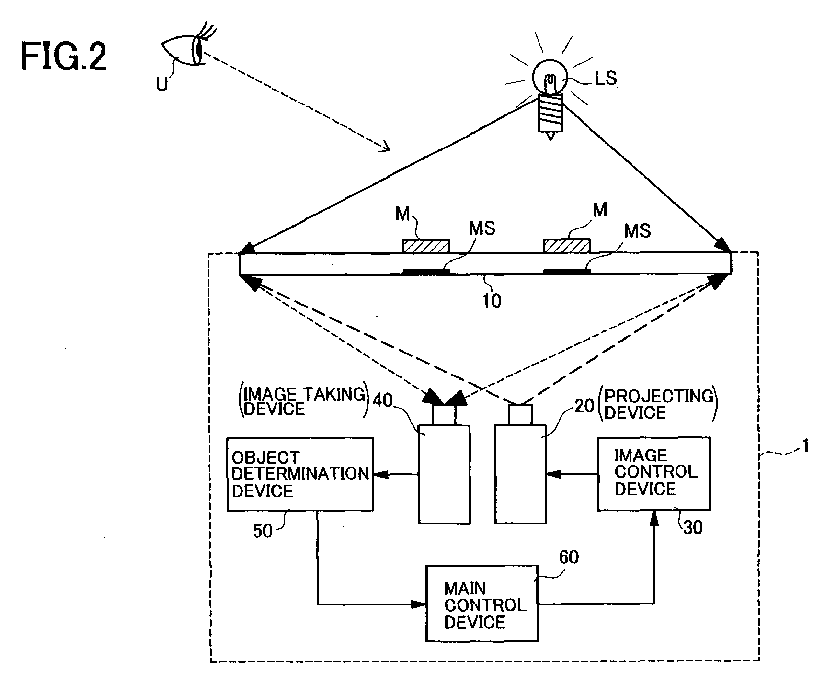

A modification of the first embodiment shown in Fig. 1 is indicated in Fig. 2. Here, although in the system in Fig. 1 the image of object M is taken from the upper side of the screen device 10 and the image including the object M is utilized, the image taking device 40 is arranged under the screen device 10 in the modification shown in Fig. 2 and the image of the shadow MS of the object M projected on the screen device 10 is taken by the image taking device 40, thereby the determination concerning with the object M, that is, the position of the object M and the player corresponding to the object M are specified.

The object M is illuminated by a light source LS, thus the shadow MS of the object M is seen on the screen device 10. Preferably, the light source LS is a light source which emits white light. And based on that white light passes through the screen device 10, the area in the shadow MS of the object M is blackly seen on the rear plane of the screen device 10 and the area other than the shadow MS is whitely seen, therefore an image similar to the black and white image can be obtained.

Here, the light source LS may be the natural light source such as the sun or may be an illumination device provided in the circumference (indoor) that the image display system is arranged or may be an illumination device such as a fluorescent tube arranged in the image display system 1.

The screen device 10 passes light from the outside of the image display system 1 toward the inner side thereof, as a result, the area formed by cutting off light through the object M can be caught as the shadow MS by the image taking device 40. Here, since the shadow MS is utilized in the modification, color and pattern does not appear and the object M is exclusively determined by utilizing the shape thereof. That is to say, the image display system according to the modification has a construction that the determination of the object M is done by utilizing the shadow MS instead of the real image of the object M. According to this construction, the image display system 1 can be realized.

Next, a concrete embodiment of the present invention will be described.

### [Gaming machine according to the concrete embodiment]

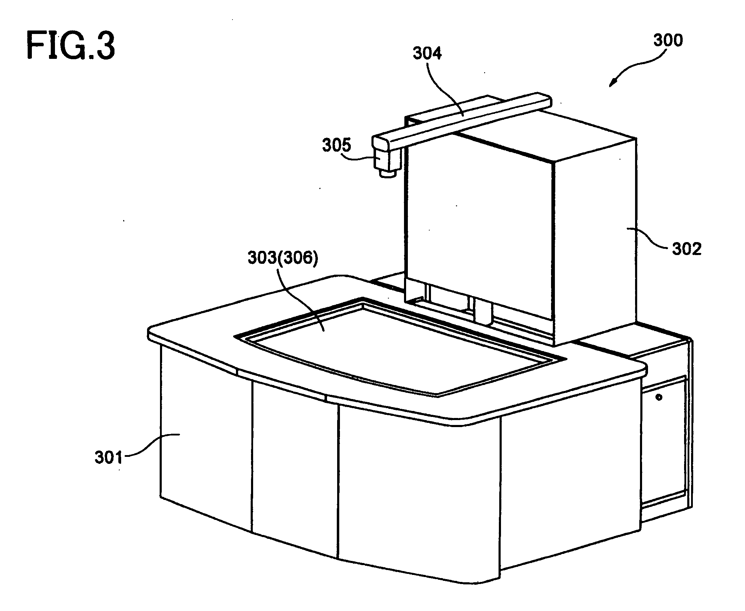

Fig. 3 is an outline perspective view showing a gaming machine utilizing the image display system 1 of the present invention. Here, although the gaming machine is explained as a device that the user U plays a roulette game, the gaming machine according to the concrete embodiment can correspond to various games such as a baccarat game, a poker game, a black jack game, a bridge game, a board game for which the image display system 1 of the present invention can be adopted, in addition to the roulette game.

The gaming machine 300 of the concrete embodiment has a table portion 301, a front display portion 302 disposed on the table portion 301 at a back side thereof, an arm portion 304 extending from the front display portion 302 to the frontward direction and a camera 305 attached to the top end of the arm portion 304.

The table portion 301 stores the optical system and the information process devices constructing the image display system 1 therein. On an upper central position of the table portion 301, an opening is formed and a transparent screen 303 constructing the screen device 10 is arranged in the opening. The transparent screen 303 functions as an upper display (hereinafter, described as "table screen 306"), the table screen 306 corresponding to the image display device 70 to display game image for the user U. Here, an upper plane of the transparent screen 303 is covered and protected by a transparent plate member such as a glass panel and the like, thus the transparent screen 303 is not broken and soiled even if the user U touches the table screen 306 by hands or puts the medal which is the object M.

On the front display portion 302, the arm portion 304 is disposed so as to extend toward the central portion of the table screen 306. And to the top end of the arm portion 304, the camera 305 which is the image taking device 40 is fixed in facing to the downward direction so that the camera 305 can take whole image of the table screen 306.

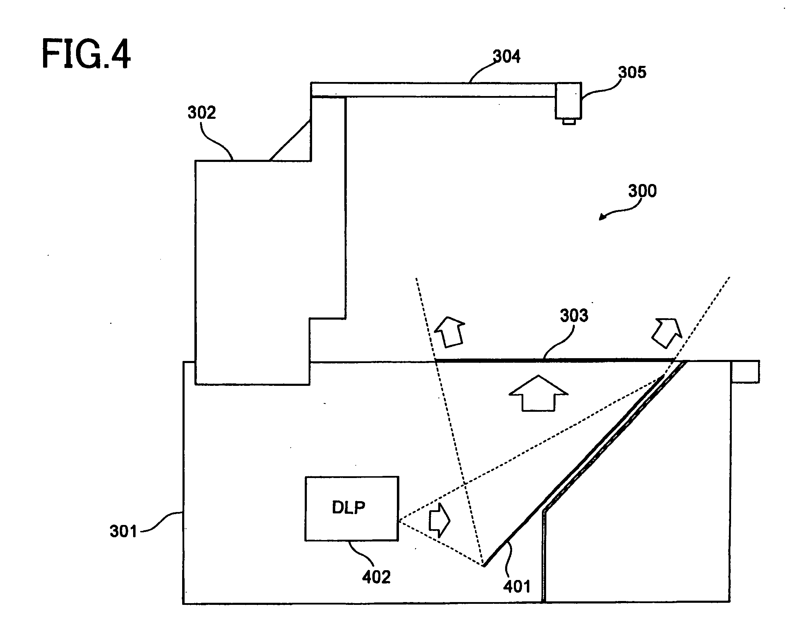

Fig. 4 is an explanatory view showing an example that an optical system constructing the image display system 1 is arranged, the image display system 1 being installed within the table portion 301.

At the central position of the table portion 301, the transparent screen 303 is fixed while being protected by the glass plate (not shown). Under the transparent screen 303, a mirror 401 is arranged in an oblique state. At a position facing to the mirror 401, a digital liquid crystal projector (abbreviated as "DLP" hereinafter) 402 corresponding to the projecting device 20 is fixed. The mirror 401 reflects the image projected from the DLP 402 toward the transparent screen 303. Both the distance to the DLP 402 and the angle of reflection plane of the mirror 401 are adjusted so that the reflected image is projected with a desirable size.

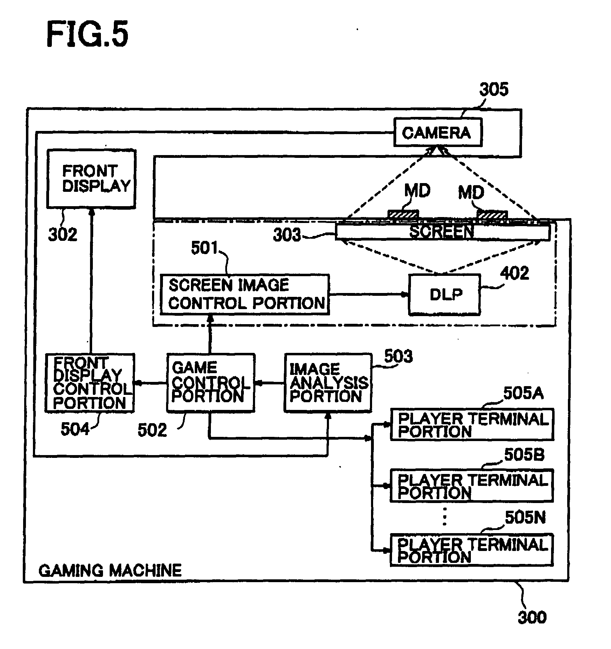

Next, the electrical construction of the gaming machine 300 will be described. Fig. 5 is a block diagram showing the electrical construction of the gaming machine 300.

As shown in Fig. 5, the transparent screen 303 is provided in the gaming machine 300. The DLP 402 corresponding to the projecting device 20 optically projects the image concerning with the game on the transparent screen 303. A screen image control portion 501 corresponding to the image control device 30 provides the image data (abbreviated as "front plane image data" hereinafter) to the DLP 402. And the camera 305 corresponding to the image taking device 40 takes the image of the front plane of the transparent screen 303 and outputs the image data obtained by taking the image of the front plane of the transparent screen 303. The image analysis portion 503 corresponding to the object determination device 50 processes the above image data, thereby determines the position of the medal MD and the player corresponding to the medal MD and outputs the medal determination information including the information indicating the position obtained by the above determination and the information indicating the player. A game control portion 502 corresponding to the main control device 60 has function to control operation of the gaming machine 300. And the game control portion 502 instructs the timing to output which image data to the screen image control portion 501 and receives the medal determination information from the image analysis portion 503, further the game control portion 502 controls the gaming machine 300 based on the information indicating the position of the medal MD and the information indicating the player.

A front display control portion 504 outputs the image data (abbreviated as "display image data" hereinafter) of the image displayed on the front display 302, corresponding to the instruction from the game control portion 502. The front display 302 receives the display image data and displays thereon. The image displayed on the front display 302 informs a game state and a progressing state of the game to the user U, in cooperation with the image displayed on the transparent screen 303.

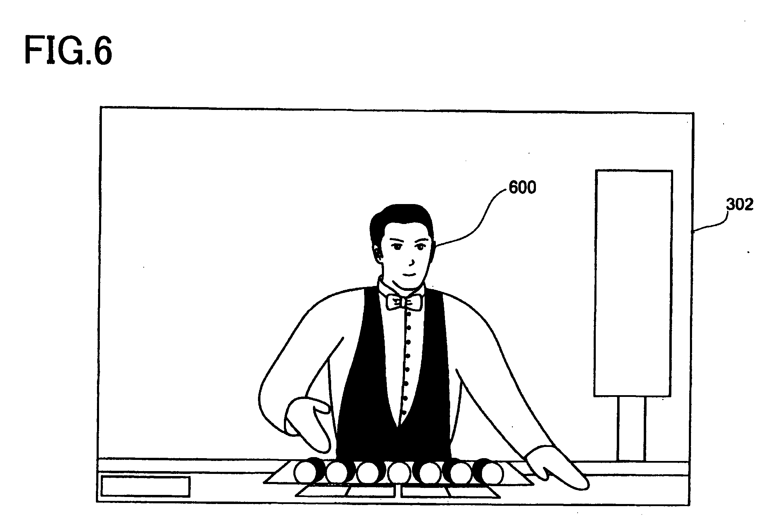

According to the example, a dealer of the roulette game is displayed on the front display 302 with a moving image. Fig. 6 is an image example displayed on the front display 302. In the image, the dealer 600 of the roulette game is displayed and it is displayed a state that throw of the roulette ball in the roulette wheel, collection and delivery of chips by the dealer 600 are displayed, thereby it is done the effect as if the player actually plays the roulette game with the dealer 600.

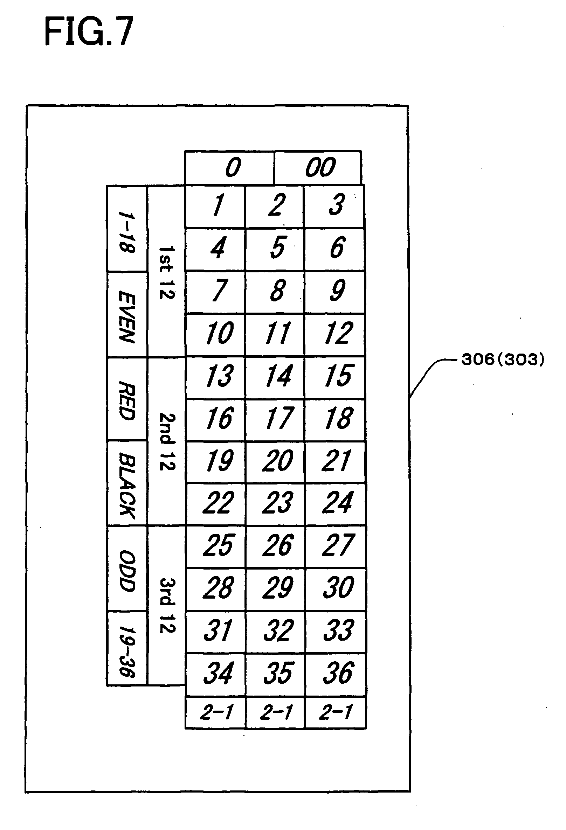

Next, an image example displayed on the table screen 306 (transparent screen 303) will be shown in Fig. 7. Fig. 7 is an explanatory view showing an image example displayed on the table screen 306 (transparent screen 303) of the gaming machine 300. In this example, it is shown an image schematically showing the roulette table on the table screen 306. Each player puts his/her medal MD on the position to which the player wants to bet, thereby the bet position and the player are transmitted to the gaming machine 300. Here, chip number / money / credit number to be betted can be determined by the player through bet buttons arranged on a player terminal portion 505 mentioned later. And after the chip number / money / credit number to be betted are input through the player terminal portion 505, the image displayed on the table screen 306 may be changed so that the image of a pile of chips betted is displayed on the betted position of the table screen 306.

Returning to Fig. 5, explanation of the electrical construction in the gaming machine 300 will be continued.

A plurality of player terminal portions 505A - 505N are connected to the game control portion 502. Each of the player terminal portions 505 has bill validation function and bet input function. Here, the bill validation function is function that coins, bills, prepaid card, credit card are received from the player and these are dealt as the credit (medal/coin) used in the gaming machine 300 and further payout of the credit (medal/coin), which the player owns at the time that payout instruction is done by the player, is conducted corresponding to the player's payout instruction. And the bet input function is function that the bet number / money / the credit number in the game are determined. The player instructs to the gaming machine 300 through the player terminal portion 505 and the medal MD which is the object M.

### [Determination process concerning with medal]

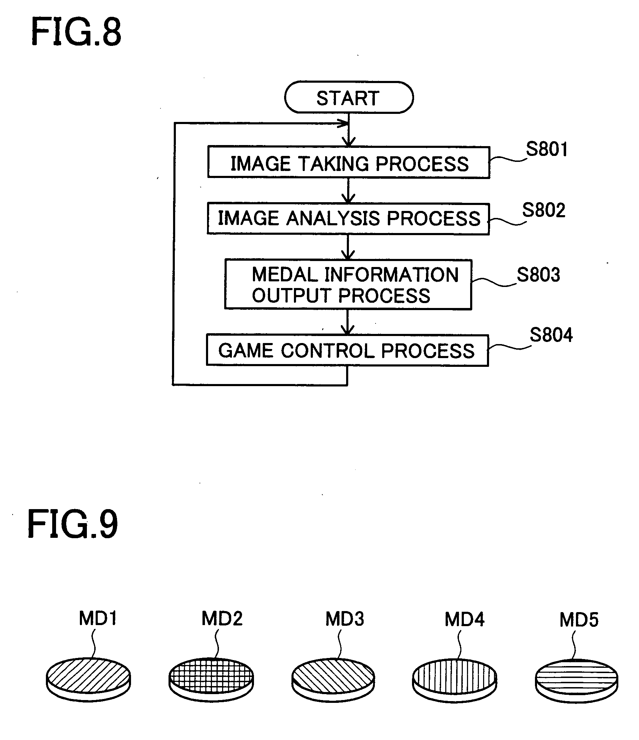

Next, it will be described with reference to Fig. 8 a process in which the medal information is produced from the image data of the transparent screen 303 (table screen 306) and such information is output. Fig. 8 is a flowchart showing the process to determine the medal position and the player using such medal by utilizing the image data.

At first, the gaming machine 300 conducts image taking process in step (hereinafter, abbreviated as "S") 801. That is to say, the camera 305 takes the image of the table screen 306 and the medal MD put on the table screen 306, and outputs the image data to the image analysis portion 503.

Fig. 9 is an explanatory view showing five kinds of medals MD1 - MD5, each of which is prepared for each of five players. Medals MD1 ~ MD5 have the same shape and size and color of each medal is made different with each other. In Fig. 9, color difference is indicated by different hatching. For example, the medal MD1 ~ MD5 are respectively colored in red, green, blue, white and black in the numbering order. Here, it is enough that at least the portion of the medal the image of which is taken by the camera 305 is colored, thus it is not required to color the other portion of the medal.

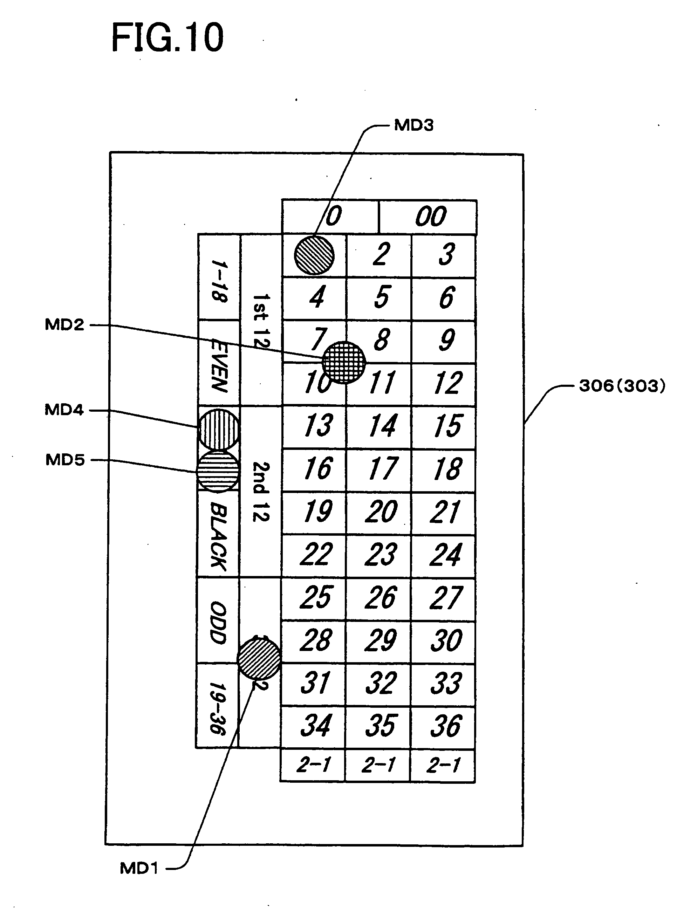

And the player corresponding to each of the medals MD1 - MD 5 is stored in the gaming machine 300. For example, the corresponding relation between the outline characteristic of the medal and the player who uses such medal is stored in the table, such that outline characteristic of the medal MD1 is red color and the player who uses the medal MD1 is the player A, and the outline characteristic of the medal MD2 is green color and the player who uses the medal MD2 is the player B and the like. Fig. 10 is an explanatory view showing an image example obtained by taking through the camera 305 the image of a state that the medals MD1 - MD 5 are positioned on the desirable bet positions on the table screen 306 by the players, respectively. The gaming machine 300 determines the position of each medal based on the image data of the table screen 306 including the image of the medals MD1 ~ MD 5 taken by the camera 305, and the player judged from the outline characteristic of each medal corresponding thereto. Further, the gaming machine 300 outputs the above determined medal information.

Next, the image analysis portion 503 conducts image analysis process by using the image data supplied form the camera 305 (S802). The image analysis portion 503 specifies the image area of each medal MD from the image data and obtains the coordinate values (x, y values) of the pixels included in such area, thereby produces the medal position information based on the above coordinate values. And the image analysis portion 503 outputs the player specifying information (for example, player No. player ID) with the medal position information, based on the image area of each medal MD and the relation between the outline characteristic of each medal MD stored beforehand and the player who uses the medal MD. For example, the image analysis portion 503 specifies the player by comparing the color information (R, G, B value) of pixels included in the image area of each medal MD with the outline characteristic (stored as RGB value) of each medal MD.

For example, in a case that the image shown Fig. 10 is analyzed, the image analysis portion 503 outputs the medal determination information indicating that the medal MD1 is betted to the twelve numbers among the numbers 25 - 36 by the player 1 corresponding the medal MD1, the medal MD2 is betted to the four numbers of 7, 8, 10 and 11 by the player 2 corresponding to the medal MD2, the medal MD3 is betted to the number 1 by the player 3 corresponding to the medal MD3, the medal MD4 is betted to the "EVEN" by the player 4 corresponding to the medal MD4 and the medal MD5 is betted to the "EVEN" by the player 5 corresponding to the medal MD5.

Next, the image analysis portion 503 outputs the medal determination information produced in S802 to the game control portion 502 (S803). The game control portion 502 receives the medal determination information and conducts whole game control (S804). For example, the game control portion 502 independently conducts a process to determine the winning number in the roulette game and determines winning/losing of each player by comparing the winning number with the medal determination information. And if winning is obtained, the payout is given to the player corresponding to the payout rate which is determined based on the bet number and the position information.

### [Modification]

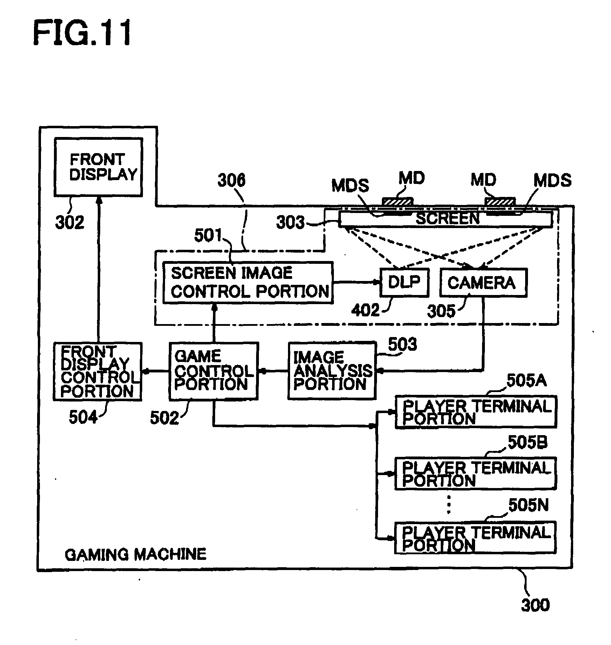

In Fig. 11, a modification of the gaming machine 300 will be shown. In this modification, the camera 305 takes the image from the rear plane of the transparent screen 303, without taking the image from the upper side of the table screen 306, and the image analysis portion 503 conducts the medal determination process by utilizing the image including the shadow MDS of the medal MD. The other constructive elements and operation thereof are same in the gaming machine 300 shown in Fig. 7, thus explanation thereof will be omitted by adding the same reference number to each of the same constructive elements.

### [Others]

(1) In order that each player can bet to a plurality of places by using one medal, it is conceivable that the player directs one bet position by using the determination button of the player terminal portion 505, thereafter the player presses the confirmation button, and the player can put the medal on the other bet position, thereby the player can bet to a plurality of places.
(2) As the object, an indication stick to indicate the bet position by hand may be utilized.
(3) It may be constructed that the medal with the different outline is respectively prepared for each player and the different worth (for example, 1 BET, 10 BET, 100 BET) is corresponded to each medal and stored, thereby the bet worth is determined based on the medal.

The present invention may be adopted for all devices or systems in which the input acceptance by the user is done by utilizing the image displayed on the display device. For example, the present invention may be adopted for the image display system for presentation, the demonstration device for sales promotion, in addition to the gaming machine.

## Claims

1. A gaming machine with a game table in which a plural kinds of objects are put on the game table in a game, each object having an outline characteristic which is different every each kind, and in which plural players conduct the game,
the gaming machine comprising:
an image taking device for taking an image of the game table on which the object is put and outputting image data of the game table;
an object determination device for processing the image data output from the image taking device and determining a position of the object on the game table and the outline characteristic of the object and outputting object information indicating the player who uses the object and a bet position to which the object is put; and
a controller for wholly controlling the gaming machine based on the object information output from the object determination device.

2. The gaming machine according to claim 1, further comprising:
a memory device for storing a relation in which the outline characteristic of each of the objects and the player who uses the object are corresponded with each other.

3. The gaming machine according to claim 2, wherein the object determination device analyzes the image data and extracts the outline characteristic of the object, and
wherein the object determination device specifies the player who uses the object having the outline characteristic extracted based on the relation stored in the memory device.

4. The gaming machine according to claim 3, wherein the object determination device specifies an area of the object,
wherein the object determination device calculates coordinate values of the area, and
wherein the object determination device produces position information of the object.

5. The gaming machine according to claim 1, wherein the object is constructed from one of a marker, a chip, a coin, a medal and a piece.

6. The gaming machine according to claim 1, wherein the outline characteristic is defined by color, shape or pattern of the object.

7. The gaming machine according to claim 6, wherein the outline characteristic is defined by combining more than two of the color, the shape and the pattern.

8. The gaming machine according to claim 1, further comprising a player terminal device operated by the player,
wherein the player terminal device accepts instruction information of the game corresponding to operation by the player, and
wherein the controller controls the gaming machine based on the object information and the instruction information.

9. The gaming machine according to claim 8, wherein the instruction information of the game includes a bet number and a bet worth.

10. A gaming machine with a game table in which a plural kinds of objects are put on the game table in a game, each object having an outline characteristic which is different every each kind, and in which plural players conduct the game,
the gaming machine comprising:
a projection device for projecting an image to display the game table;
a screen device for focusing the image projected by the projection device;
an image taking device for taking an image of the object put on the screen device and outputting image data of the object;
an object determination device for processing the image data output from the image taking device and determining a position of the object on the screen device and the outline characteristic of the object and outputting object information indicating the player who uses the object and a bet position to which the object is betted; and
a controller for wholly controlling the gaming machine based on the object information output from the object determination device.

11. The gaming machine according to claim 10, wherein the image taking device for taking the image of the object put on the screen device from a front plane of the screen device.

12. The gaming machine according to claim 10, wherein the image taking device for taking the image of the object put on the screen device from a rear plane of the screen device.
